(19) Europäisches Patentamt
European Patent Office
Office européen des brevets

(11) Publication number: 0 036 411 B1

(12) **EUROPEAN PATENT SPECIFICATION**

(45) Date of publication of patent specification: 15.02.84

(51) Int. Cl.³: C 01 B 17/00, B 01 J 8/00, C 01 B 17/45

(21) Application number: 79901487.3

(22) Date of filing: 01.10.79

(86) International application number: PCT/US79/00802

(87) International publication number: WO 81/00843 02.04.81 Gazette 81/8

# (54) SULFUR OXIDE REMOVAL FROM GAS.

(43) Date of publication of application: 30.09.81 Bulletin 81/39

(45) Publication of the grant of the patent: 15.02.84 Bulletin 84/7

(84) Designated Contracting States: FR GB

(56) References cited:
DE - A - 2 249 874
DE - A - 2 501 644
FR - A - 2 418 019
GB - A - 1 470 299
US - A - 1 271 899
US - A - 2 113 198
US - A - 3 361 524
US - A - 3 790 660
US - A - 3 808 321
US - A - 3 980 756

(73) Proprietor: COMBUSTION ENGINEERING, INC.
1000 Prospect Hill Road
Windsor Connecticut 06095 (US)

(72) Inventor: NOFAL, Abb Amin
7422 South 68 East Avenue
Tulsa, OK 74133 (US)

(74) Representative: Rowe, Eric Nielsen et al,
Edward Evans & Co. Chancery House 53-64
Chancery Lane
London WC2A 1SD (GB)

EP 0 036 411 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Sulfur oxide removal from gas

## Technical field

The present invention relates to the use of an aqueous solution in scrubbing sulfur oxide from the gases exhausted from a combustion process. More particularly, the invention relates to the use of an aqueous solution of high reserve alkalinity in plural zones, each of the zones controlled to different pH values, to react with sulfur dioxide ($SO_2$) and remove it from combustion gases.

A long-standing problem is the air pollution by sulfur oxides in gases discharged from the combustion of sulfur-containing fuels. There are removal systems which use an aqueous solution having materials which will react with the sulfur oxides upon contact.

The most commonly used contact materials may be limestone and dolomite. These materials have been added to the furnace in which combustion takes place. An aqueous slurry has also been formed of these materials to contact and remove, or scrub, $SO_2$ from the combustion gases. However, there are several handling problems with these materials because they are insoluble. Additionally, the chemistry of their system is hard to control in order to avoid precipitates. And precipitates of this material can physically obstruct the vessels and piping to result in shutdowns. Additionally, the physical access of limestone and dolomite may be a factor in their use.

## Background art

Evidently a soluble chemical will make it easier to control the pH of the reactions with $SO_2$. Further, the pH of the reactions may be more readily maintained at different values in separate zones to maximize the efficiency of the final reaction while minimizing the quantity of the chemical used to react with the $SO_2$.

The prior art, U.S. Patent No. 3,808,321 provided a two stage scrubbing process for the removal of $SO_2$ from waste flue gas wherein the $SO_2$ containing flue gas was contacted with a calcium based liquid absorbent in a first stage where the pH of the absorbent was maintained below 4 and thence in a second stage where the pH of the absorbent was maintained above 6.

Additional prior art, U.S. Patent No. 3,980,756 provided a single stage scrubbing process for the removal of $SO_2$ from flue gas wherein the $SO_2$ containing gas was contacted with an aqueous solution containing alkaline earth metal carbonates at a pH of 6.0 to 6.5 so as to form sulfites and bisulfites upon absorption of the $SO_2$. The sulfite and bisulfites within the spent scrubbing solution were then oxidized to sulfate in a separate tank at a pH not less than 4.5.

In German Specification DE—A—2,501,644 there is disclosed the removal of $SO_2$ from waste gases in a two-stage aqueous washing process in which the first stage is acidic (e.g. a pH of 4) and the second stage basic (e.g. a pH of 10). In the first stage bisulfite is formed while in the second stage sulfite is formed, the solution from the second stage once it has become too acid being used in the first contact stage. This German specification discloses a discontinuous process.

## Disclosure of invention

It is an object of the invention to seek to mitigate the disadvantages of the prior art.

According to the invention there is provided a method of removing $SO_2$ from other gases of the type wherein the $SO_2$ and other gases are contacted with a basic alkali metal aqueous solution in a first zone, thence the gases and remaining $SO_2$ from the first zone are contacted in a second zone with a basic alkali metal aqueous solution and discharged from the second zone with the $SO_2$ reduced to a desired level; comprising the steps of:

maintaining the basic metal aqueous solution in the first zone at a pH not greater than 6, which maintains a high ratio of bisulfite to sulfurous acid to increase the bisulfite concentration, continually discharging solution from the first zone with a high concentrate of bisulfite ions;

maintaining the basic metal aqueous solution in the second zone at a relatively high pH not less than 6 wherein $SO_2$ from the first zone now forms ionized sulfurous acid to maintain a high ratio of sulfite ions to bisulfite ions; and

flowing the solution formed in the second zone as the contact solution in the first zone.

The invention is characterised in passing the gases and the basic metal aqueous solutions continuously through the respective first and second zones in counterflow relation; and in sensing a pH value of a solution within the process which varies with the quantity of $SO_2$ in the gas mixture thereby to control the rate of alkali metal compound supplied to the second zone to form the basic alkali metal aqueous solution in the second zone in accordance with the pH sensed.

A basic sodium compound such as sodium carbonate may be supplied to form the base aqueous solution and control the addition of the compound to the second zone as a factor in regulation of the pH ranges of both zones.

A method embodying the invention is hereinafter described, by way of example, with reference to the accompanying drawings.

## Drawing description

Fig. 1 is a flow diagram of the gases and fluid solutions reacting in accordance with the invention; and

Fig. 2 is a graph illustrating the mol fraction

of ions in solution as a function of pH for aqueous solutions containing $SO_2$ and related to species.

Best mode embodiment

The present invention is embodied in a method of, and structure for, bringing together the sulfur oxides of combustion gases and chemicals to bind the sulfur in compounds which can be disposed of in a way acceptable to current environmental protection practices. $SO_2$ is the oxide which is specifically removed from other gases. The chemical is soluble sodium carbonate. The final product of the process is predominantly sodium bisulfite. Of course, the first concern is with the discharge gas. It is stripped, or scrubbed of $SO_2$ by the chemical process.

It is to be emphasized that sodium carbonate is the chemical preferred because of low cost and ease of handling. The availability of this sodium compound may change. The end user may be willing to accept the handling problems of other basic alkali metal compounds. Therefore, it is possible that another basic sodium compound, such as sodium hydroxide, may be preferred in the future for use in the method in which the present invention is embodied.

The drawing (Figure 1) discloses the structure in which the process is carried out. Tower 1 receives, through inlet 2, the gas polluted with $SO_2$. The first zone, defined by tower 1, is where the chemical and gas make initial contact.

The gases are flowed from the first zone with that portion of $SO_2$ which was not removed in the first zone and routed by conduit 3 to tower 4. The second zone of contact is defined as within this tower 4. Discharge of the treated scrubbed, stripped, conditioned gases is through outlet 5 from the top of tower 4.

Both towers have a set of nozzles which spray a solution of soluble sodium carbonate into the gases so that the gases and the solution pass continuously through the towers in counter-flow relation.

The nozzles are supplied the solution by pumps 10, 11. Each pump withdraws solution from the bottom of its tower and recyles it to the nozzles mounted in the upper portion of the tower.

The aqueous solution is supplied the system through conduit 12. The quantity of the solution is regulated by a valve 13 under the control of a meter 14 which detects the pH of the solution to the nozzles of tower 1. The solution of tower 4 is withdrawn through conduit 15 and conducted to the tower 1. The spent, or used, solution of tower 1 is finally discharged from the system through conduit 16.

Although the preferred embodiment of the invention illustrated in the drawings, specifically discloses meter 14 in the position to sense the pH of the solution circulated by pump 10, it is to be clearly understood that the invention does not limit the control of the input chemical through valve 13 by this pH sensor at this point in the system. The pH in some other portion of the system, that of tower 4 as an example, could be sensed by meter 14 and its control exerted over valve 13. This invention is not to be limited by location of the pH measurements. The measurement is to be made at that point in the system where there is a change in this factor which will effectively dictate the quantitative requirements of the chemical through conduit 12.

The two towers do not function as "stages" in the sense that a series of trays function in a fractionation column. The chemical reaction in tower 1 is distinct from the chemical reaction in tower 4. One example of difference is that the pH values in tower 1 are entirely different from the pH values in tower 4.

There is a progressive removal of $SO_2$. The first portion of $SO_2$ is removed in tower 1 and a second portion is removed in tower 4. But the treating solutions established in each tower are chemically different. The solution bled from tower 4 has $SO_2$ removal potential and must be regarded as having this potential on an entirely different basis than the solution fed to tower 4. The difference is to be explained in several ways in subsequent disclosure.

The nozzles in the towers 1 and 4 are arranged in tiers, mounted to spray their solution downward into the rising stream of gases to be contacted by the solution. The pressure drop generated in the flow stream of the treated gases will determine the particular form of nozzle structure bringing the solution into contact with the gas stream. The nozzles in tower 1 provide the contact necessary to remove $SO_2$ from the gas stream conducted into tower 1 through inlet 2. Pumps 10 and 11 cycle the solution from the bottom of towers 1 and 4 to nozzle structure which generates the vapor-liquid contact.

Each of the towers 1 and 4 are disclosed with cone bottoms. All systems of this general type have the problem of solids. Collecting on the walls and bottoms of the vessels and conduits. Periodically, towers 1 and 4 must be flushed with fluid to remove solids collecting on their walls and their bottoms.

In tower 1 a spray system is indicated at 20, connected to the discharge of pump 10. In tower 4, a spray system 21 is connected to the discharge of pump 11. The particular form or operation of these spray systems is not an essential element of the present invention. The disclosure simply offers the structure as a means for flushing the towers out discharge conduits 22 and 23. These systems are important, and their particular form and operation may well be developed with unique and inventive features. However, the present disclosure merely indicates the spray systems are important to the operation of this preferred embodiment.

The solutions pumped from the bottom of the towers 1 and 4 must be limited in their proportion of solids to fluid. A system to sense the TDS in the bottom of tower 1 is indicated at 25. System 25 is expected to develop a control signal for valve 26 which regulates a fluid introduced by conduit 27 into the solution in the lower portion of tower 1 to control, or regulate the TDS of the pumped solution.

Again, this system of TDS control is not an essential element of the invention. Still, it is important and might obscure the teachings of the invention if not disclosed in perspective.

Level control system 28 is expected to respond to the actual level of liquid solution in the bottom of tower 4. Valve 29 is in conduit 15 to regulate the discharge of solution from the lower portion of tower 4. The addition of chemical to tower 4 is by means of conduit 12 under control of pH cell 14. The level control system 28 is expected to follow the regulated addition by a parallel bleed-off through conduit 15.

The level control structure of tower 1 is more simple. Vertical overflow pipe 30 has its upper intake opening at the elevation desired for the solution level in the lower part of tower 1.

The chemical reactions of the process should be as readily understood as a textbook. However, the description is complicated by the gas, with $SO_2$, flowing in one direction through the zones of the towers and the scrubbing solution flowing through the towers in the opposite direction. The sequence of chemical changes relative to the treated gas is opposite to the sequence of chemical changes relative to the solution.

Before disclosing the method of the invention carried out in the stages, vessels or zones, the reaction of $SO_2$ with water is reviewed. $SO_2$ readily combines with water to form sulfurous acid. This reaction is weak and reversible but it must be understood as providing both bisulfite ions and sulfite ions. The pH relation to the shifting proportions of sulfite and bisulfite ions is well understood.

The graph (Fig. 2) illustrates the mol fraction of ions in solution as a function of pH for aqueous solutions containing $SO_2$ and related species, and is found in at least U.S. Patent 3,980,756 issued September 14, 1976, to D. L. Dixson et al. As shown in the graph, the concentration of bisulphite ion theoretically predominates in the range of pH values from about 2 to 7, while the concentration of sulfuric acid predominates at pH values below approximately 2 and a concentration of sulfite ion predominates at pH values above approximately 7.

The first and second zones within towers 1 and 4 had their conditions realistically regulated in the recently tested actual reduction to practice. It was originally calculated that the conditions maintained in the zones, including their differential in pH, would follow the conditions in the graph, and graphed in U.S. Patent 3,980,756. In testing the actual reduction to practice, the pH levels of the two zones followed the values of the graph. However, interaction between the connected zones slightly biased the theoretical expectations.

The ratio of sulfite to bisulfite ions in the second stage was high as expected. However, the pH sank to as low as 6 at times. The differential between the second zone and the first zone became as small 1 pH. Nevertheless, the solution with a high ratio of sulfite to bisulfite discharged from the second stage was efficiently utilized to maintain the high ratio of bisulfite to sulfurous acid in the first stage. The discharge from the first stage, with a high bisulfite content, evidenced effective utilization of the chemical by the process.

The original design of the process contemplated the first stage maintaining a pH near 5.5. The actual reduction to practice maintained the pH at about this level of 5.5 with the $SO_2$ content of the gases into tower 1 measured at about 600 ppm (parts per million). Thus, the expected performance of the process, in its actual reduction to practice, was by and large quite close to design expectations with the exception of the pH level in the second zone ranging down to as low as 6 and to as high as about 9 to maintain the desired high ratio of sulfite to bisulfite discharge to the first stage.

The terms "first tower" and "second tower" are developed by considering the flow of the gas being treated. Whether the towers are described as containing zones or stages, the initial one of the two to receive the gases is called "the first". Obviously, the next in line is called "the second". This arrangement will sustain the orderly development of the disclosure.

Begin with the fact that the chemical is a basic solution to the second stage. The high reserve alkaline feed to the second stage results in a high pH in that stage.

Also, in the second stage, the $SO_2$ not scrubbed in the first stage will hopefully be fairly low. Low is a relative term, of course, but this second stage is operated to be an efficient, final removal, of the $SO_2$. $SO_2$ not removed in the first stage is reduced to the low value desired in the second stage.

In further analysis of the second stage, the $SO_2$ will form sulfurous acid, and in the high pH will fully ionize. The proportion of sulfite to bisulfite will be high due to the high pH.

At the same time, the sodium carbonate ($Na_2CO_3$) of the preferred embodiment, added to the second stage as the base, is ionized. The reaction in this second stage will form sodium sulfite and carbon dioxide.

At this point of final contact between the $SO_2$ and sodium carbonate in solution the sulfurous acid is formed and then the sodium sulfite ($Na_2SO_3$) and carbon dioxide to irreversibly remove $SO_2$ from the gases. The solution remaining, rich in sulfite ions ($SO_3^{=}$), is conducted forward to the first stage.

In the first stage, $SO_2$ of the gases being scrubbed is also forming sulfurous acid. This acid is ionized to bisulfite at the low pH and this bisulfite is combining with the sodium ions of the feed solution from the second stage to form sodium bisulfite. The sodium bisulfite is discharged from the first stage for final disposal.

The sensed pH condition of the process is placed in control of the fresh chemical feed to the second stage. As the sensed pH changes, the base solution feed rate is regulated to the second stage to increase the generation of the sulfite ion to the first stage.

As the chemical is added to the second stage, and the output of the resulting chemical solution is flowed to the first stage, the chemistry analysis logically begins with the reactions of the second stage. First, and this is also true in the first stage, the $SO_2$ of the gases reacts with the $H_2O$ of the aqueous phase of the feed to form sulfurous acid ($H_2SO_3$). The literature of the art emphasizes this as an unstable, reversible reaction, the acid ionizing in dependence upon the pH of the solution. As the second stage is maintained strongly basic by the addition of the fresh feed, [the sulfite ion]/[bisulfite ion] ratio will be high. The equation can be written

$$H_2SO_3(\text{solution} \leftrightharpoons 2[H^+] \cdot [SO_3^=]$$

Turn now to the sodium carbonate. This base is to be examined in its ionized form.

$$Na_2CO_3 \leftrightharpoons 2[Na^+] \cdot [CO_3^=]$$

These two chemicals react and the formula is written:

$$Na_2CO_3+H_2SO_3 \rightarrow Na_2SO_3+H_2O+CO_2$$

The carbon dioxide leaves as a gas and the reaction is irreversible. The remaining sodium sulfite is examined in the ionized form:

$$Na_2SO_3 \leftrightharpoons 2[Na^+] \cdot [SO_3^=]$$

Thus is formed the solution fed to the first stage. Of course, in the first stage, $SO_2$ of the gases being scrubbed is forming sulfurous acid with the aqueous phase, just as in the second stage. The vapor pressure of the $SO_2$ is expected to be greater because the concentration of $SO_2$ is greater, being the initial contact between the $SO_2$ polluted gases and the scrubbing solution.

As the sulfurous acid concentration becomes greater in the first zone, the pH decreases. The driving force to form additional sulfurous acid decreases. A continual supply of sulfite will have to be available to react with sulfurous acid being formed to lower the sulfurous acid formation and raise the pH.

The be more specific, the relation between the mol fractions and pH in the first stage solution will have to be held within the range of 3 to 6. This is evident from the chart of the values in at least U.S. Patent 3,980,756.

The formulation of the chemical reaction is elementary. From the second stage, sodium sulfite is fed to the first stage. Sulfur dioxide in the processed gases is fed to the first stage to form sulfurous acid with the water of the solution. The reaction produces sodium bisulfite as the product of the process. The reaction can be given the form:

$$H_2SO_3+Na_2SO_3 \rightarrow 2NaHSO_3$$

$$2[H^+] \cdot [SO_3^=]+2[Na^+] \cdot [SO_3^=] \rightarrow 2NaHSO_3$$

The overall teaching is that operation of the second stage at a pH within the range of 6 to 9 will remove $SO_2$ by the continual formation of sodium sulfite. A solution of sodium sulfite in this process has potential for additional removal of $SO_2$ within a range of 3 to 6. Therefore, the present inventive concept is to utilize the $SO_2$ removal potential of sulfite in a separate environment from the environment in which the sulfite was formed. This additional or full utilization of the chemical will result in a much lower chemical cost than if the removal process were terminated with the production of sulfite from the second stage.

## Claims

1. A method of removing $SO_2$ from other gases of the type wherein the $SO_2$ and other gases are contacted with a basic alkali metal aqueous solution in a first zone, thence the gases and remaining $SO_2$ from the first zone are contacted in a second zone with a basic alkali metal aqueous solution and discharged from the second zone with the $SO_2$ reduced to a desired level; comprising the steps of:

maintaining the basic metal aqueous solution in the first zone at a pH not greater than 6, which maintains a high ratio of bisulfite to sulfurous acid to increase the bisulfite concentration, continually discharging solution form the first zone with a high concentrate of bisulfite ions;

maintaining the basic metal aqueous solution in the second zone at a relatively high pH not less than 6 wherein $SO_2$ from the first zone now forms ionized sulfurous acid to maintain a high ratio of sulfate ions to bisulfite ions; and

flowing the solution formed in the second zone as the contact solution in the first zone; characterized in passing the gases and the basic metal aqueous solutions continuously through the respective first and second zones in counter flow relation: and in sensing a pH value of a solution within the process which varies with the quantity of $SO_2$ in the gas mixture thereby to control the rate of alkali

metal compound supplied to the second zone to form the basic alkali metal aqueous solution in the second zone in accordance with the pH sensed.

2. A method according to Claim 1, characterised in that the basic alkali metal solution is formed with sodium carbonate.

**Patentansprüche**

1. Verfahren zur Entfernung von $SO_2$ aus anderen Gasen, der Art, bei der das $SO_2$ und die anderen Gase in einer ersten Zone mit einer basischen wässerigen Alkalilösung in Berührung gebracht werden, die Gase und das nach der ersten Zone verbleibende $SO_2$ in einer zweiten Zone mit einer basischen wässrigen Alkalilösung in Berührung gebracht und aus der zweiten Zone mit auf den gewünschten Gehalt verringertem $SO_2$ abgelassen werden, bei dem man stufenweise

die basische wässrige Alkalilösung in der ersten Zone auf einem pH von höchstens 6 hält, wodurch ein hohes Verhältnis von Bisulfit zu schwefliger Säure aufrechterhalten wird, um die Bisulfitkonzentration zu erhöhen, wobei kontinuierlich Lösung aus der ersten Zone mit einer hohen Bisulfitionenkonzentration ausgetragen wird,

die basische wässrige Alkalilösung in der zweiten Stufe auf einem verhältnismässig hohen pH von mindestens 6 hält, wobei $SO_2$ aus der ersten Zone nun ionisierte schweflige Säure bildet, um ein hohes Verhältnis von Sulfitionen zu Bisulfitionen aufrechtzuerhalten und

die in der zweiten Zone gebildete Lösung als Kontaktlösung in die erste Zone fliessen lässt, dadurch gekennzeichnet, dass man die Gase und die basischen wässrigen Alkalilösungen kontinuierlich jeweils durch die ersten und zweiten Zonen im Gegenstrom führt und einen pH-Wert einer Lösung im Verfahren, der sich mit der $SO_2$-Menge im Gasgemisch ändert, misst und dadurch die der zweiten Zone zugeführte Menge Alkaliverbindung reguliert, um die basische wässrige Alkalilösung in der zweiten Zone gemäss dem gemessenen pH zu bilden.

2. Verfahren nach Anspruch 1, dadurch gekennzeichnet, dass man die basische Alkalilösung mit Natriumcarbonat herstellt.

**Revendications**

1. Procédé en vue d'éliminer le $SO_2$ d'autres gaz, procédé dans lequel le $SO_2$ et d'autres gaz sont mis en contact avec une solution aqueuse basique d'un métal alcalin dans une première zone, après quoi les gaz et le $SO_2$ résiduel de cette première zone sont mis en contact, dans une deuxième zone, avec une solution aqueuse basique d'un métal alcalin, pour être ensuite déchargés de cette deuxième zone, la teneur en $SO_2$ étant réduite au niveau désiré, ce procédé comprenant les étapes consistant à:

maintenir la solution aqueuse basique du métal dans la première zone à un pH ne dépassant pas 6, maintenant ainsi un haut rapport entre le bisulfite et l'acide sulfureux pour accroître la concentration en bisulfite, puis décharger continuellement la solution de la première zone avec une haute concentration en ions bisulfite;

maintenir la solution aqueuse basique du métal dans la deuxième zone à un pH relativement élevé ne descendant pas en dessous de 6, le $SO_2$ venant de la première zone formant alors de l'acide sulfureux ionisé pour maintenir un haut rapport entre les ions sulfite et les ions bisulfite; et

laisser s'écouler la solution formée dans la deuxième zone, comme solution de contact, dans la première zone, caractérisé en ce qu'on fait passer continuellement les gaz et les solutions aqueuses basiques des métaux dans une relation de contre-courant dans la première et la deuxième zone respectivement, tandis qu'au cours du procédé, on détecte le pH d'une solution, ce pH variant avec la quantité de $SO_2$ du mélange gazeux, afin de contrôler ainsi le taux de composé de métal alcalin chargé dans la deuxième zone pour former la solution aqueuse basique d'un métal alcalin dans cette deuxième zone conformément au pH détecté.

2. Procédé suivant la revendication 1, caractérisé en ce que la solution basique du métal alcalin est formée avec du carbonate de sodium.

FIG.1

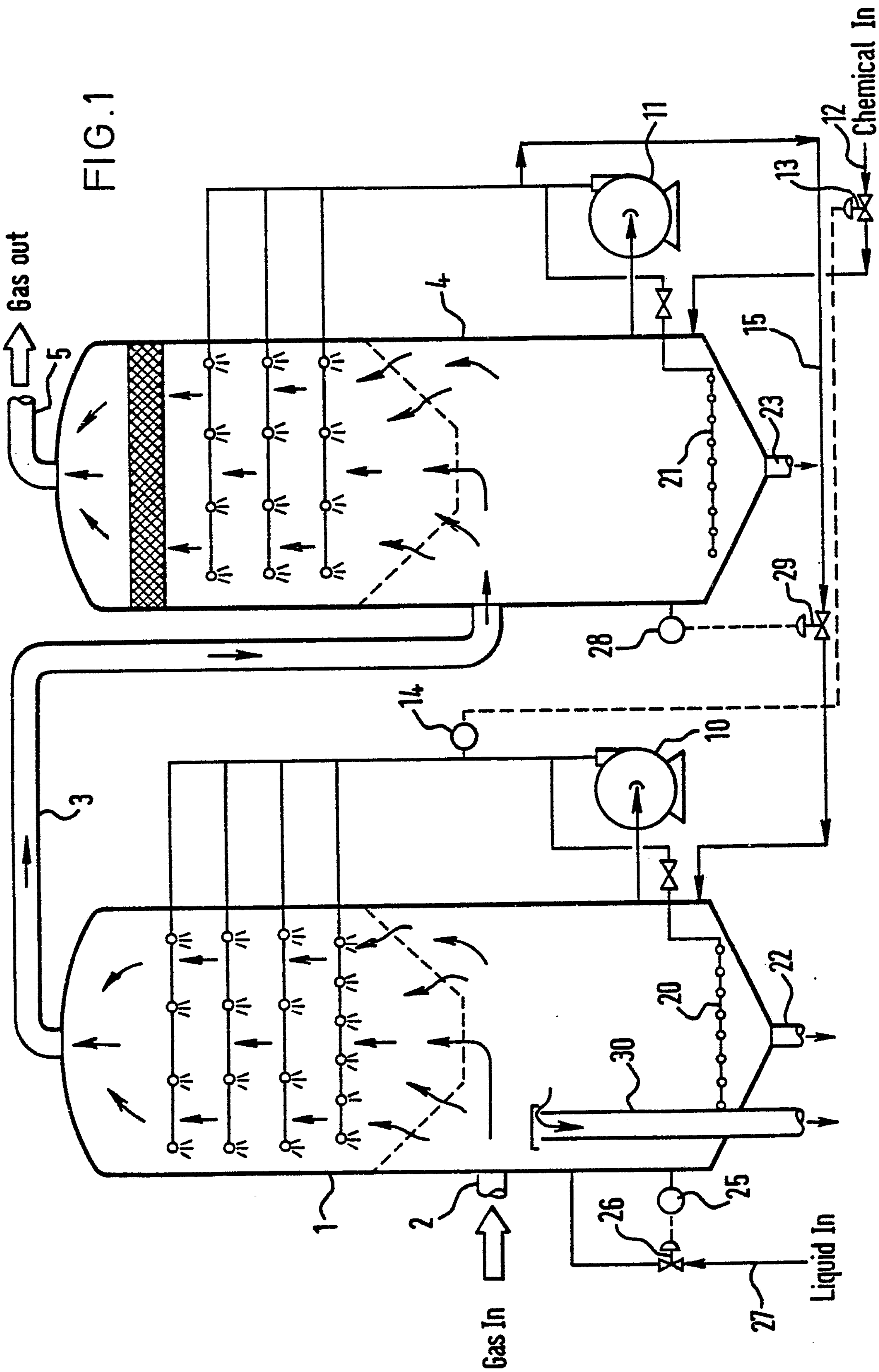
Gas out
Chemical In
Liquid In
Gas In
1
2
3
4
5
10
11
12
13
14
15
20
21
22
23
25
26
27
28
29
30

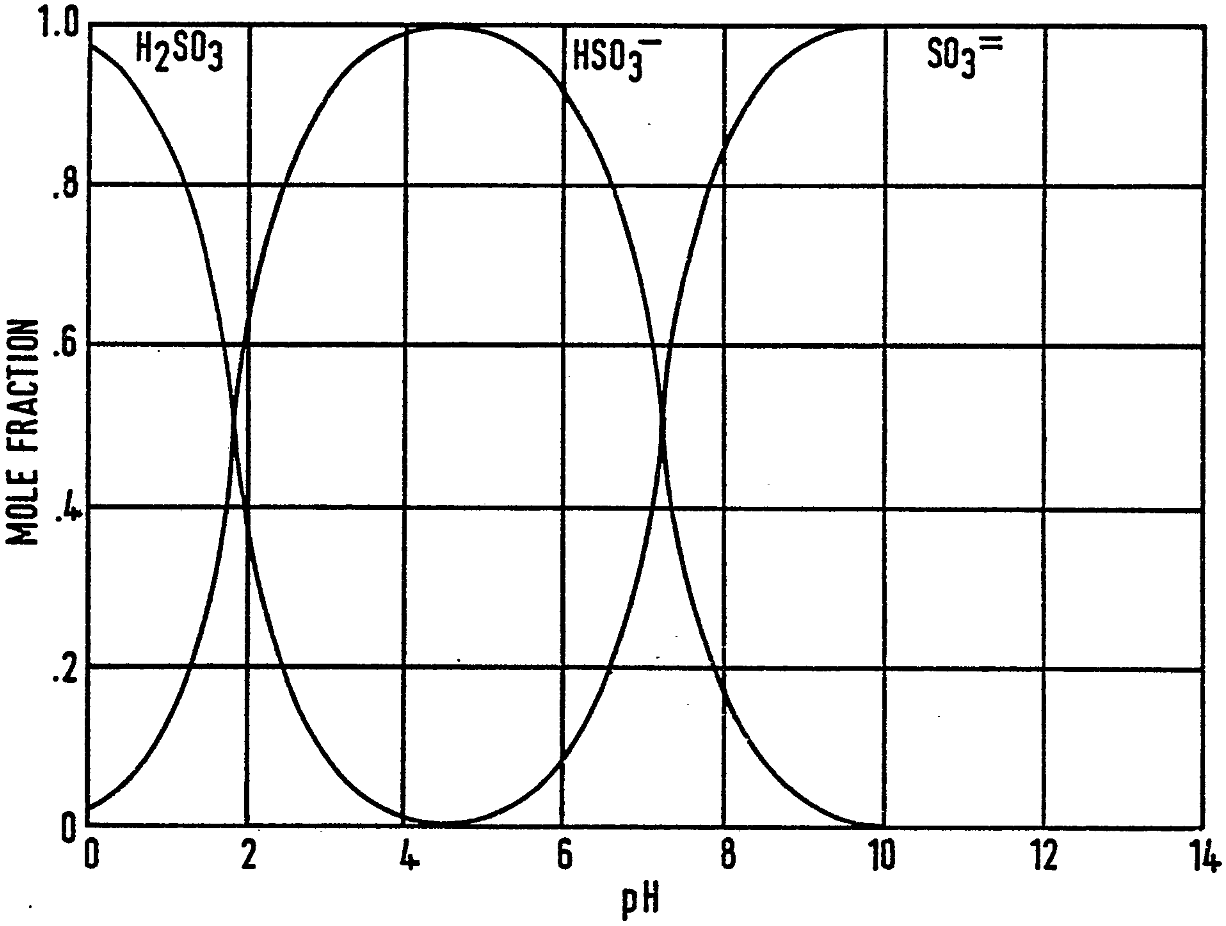


FIG.2.